# EUROPÄISCHE PATENTSCHRIFT

(11) **EP 2 982 551 B1**
(45) Veröffentlichungstag und Bekanntmachung des Hinweises auf die Patenterteilung: **23.11.2016**
(21) Anmeldenummer: 15002252.3
(22) Anmeldetag: 29.07.2015
(51) Int. Cl.: B60S 3/04, B60S 3/00

(54) **MOBILE WASCHANLAGE FÜR FAHRZEUGE**
MOBILE WASH FACILITY FOR VEHICLES
INSTALLATION DE LAVAGE MOBILE POUR VEHICULES

(30) Priorität: 07.08.2014 DE 102014011437
(43) Veröffentlichungstag der Anmeldung: 10.02.2016
(73) Patentinhaber: Wolf, Thomas, 36433 Bad Salzungen (DE)
(72) Erfinder: Wolf, Thomas, 36433 Bad Salzungen (DE); Herzog, Levi, 09232 Hartmannsdorf (DE); Wolf, Klaus Dieter, 74199 Untergruppenbach (DE)
(74) Vertreter: Schmid, Barbara

(56) Entgegenhaltungen:
- EP-B1- 1 291 471
- WO-A1-03/099473
- US-A- 5 033 489

## Beschreibung

### TECHNISCHES GEBIET

Die Erfindung betrifft eine mobile Waschanlage für Fahrzeuge, mittels der insbesondere Großfahrzeuge gereinigt und gegebenenfalls auch dekontaminiert werden sollen. Auch wenn grundsätzlich sämtliche Fahrzeuge mit einer solchen mobilen Waschanlage gereinigt werden könnten, ist die Waschanlage insbesondere für Ketten- und Radfahrzeuge militärischer und ziviler Art ausgelegt. Die mobile Waschanlage eignet sich somit beispielsweise für die Reinigung von Baustellenfahrzeugen und von Panzern. Die Reinigung derartiger Fahrzeuge soll insbesondere beim Übergang von unbefestigtem Gelände auf glatte Fahrstraßen erfolgen, um eine grobe Verschmutzung der Fahrstraßen zu vermeiden.

### STAND DER TECHNIK

Fahrzeugwaschanlagen für Großfahrzeuge sind bekannt. Diese sind in der Regel jedoch stationär ausgebildet und damit fest mit dem Erdreich verbunden. Sie weisen in der Regel eine betonierte Überfahrrampe mit einer Rüttelstrecke auf, durch deren Mitte sich ein um seine Längsachse schwenkbares Rohr mit einer Vielzahl von Düsen zieht. Damit wird der Unterboden des Fahrzeugs auf einer relativ großen Fläche abgesprüht und gereinigt. Das entstandene Abwasser wird samt dem abgespülten Schlamm in einem offenen Gerinnegraben in der Mitte der Überfahrrampe mittels Spüldüsen fortgespült. Neben der Überfahrrampe können Seitenwaschdüsen und Druckwasserdüsen vorhanden sein. Die Seitenwaschdüsen können insbesondere an einem längs verlaufenden Düsenbalken vorhanden sein, der in der Regel hydraulisch verschwenkt werden kann. Die Seitenwaschdüsen dienen vorwiegend der Reinigung der oberen Seitenflächen der Großfahrzeuge. Die Druckwasserdüsen sind regelmäßig in der Nähe des jeweils vorderen und hinteren Endes der Überfahrrampen angebracht. Sie sind drehbar gelagert und dienen der intensiven Reinigung der Räder beziehungsweise der Gleisketten der Großfahrzeuge sowie der Reinigung der Front- und Heckseite der Fahrzeuge. Seitlich der Überfahrrampe ist ein Gebäude vorhanden, in dem sich der Steuerstand, die Pumpen und gegebenenfalls auch die Energieversorgung befinden. Eine derartige Fahrzeugwaschanlage ist beispielsweise aus der US 2013/0098403 A1 bekannt.

Eine mobile Überfahrrampe ist aus der US 2012/0012138 A1 bekannt. Die mobile Überfahrrampe besitzt zwar Bodensprühdüsen, so dass eine Reinigung des Unterbodens der Fahrzeuge möglich ist, allerdings ist keine effektive Reinigung der Seiten der Fahrzeuge möglich.

Eine alternative mobile Überfahrrampe gemäß der WO 03/099473 A1 besitzt ein Tor, das mit Düsen zur Reinigung der Seiten- und Dachflächen ausgestattet ist. Eine gleichmäßige Reinigung ist aufgrund des einfachen, kurzen Düsentores jedoch nur mit großem Aufwand und unter mehrfachem Vor- und Zurückfahren des Fahrzeugs möglich. Darüber hinaus ist durch die klappbare Ausführung der Überfahrrampe keine Ausbildung derselben mit Bodenreinigungsdüsen möglich.

Aus der EP 1 291 471 B1 ist eine Kabine zur Reinigung von Fahrzeugen bekannt, bei der zwei nebeneinander stehende Container eine gemeinsame Reinigungskabine bilden. Die zu reinigenden Fahrzeuge werden in diese Reinigungskabine gefahren und dort gereinigt. Dadurch können lediglich solche Fahrzeuge gereinigt werden, deren Höhe geringer ist als die Höhe der verwendeten Container.

### DARSTELLUNG DER ERFINDUNG

Ausgehend von diesem vorbekannten Stand der Technik liegt der Erfindung die Aufgabe zugrunde, eine verbesserte Waschanlage anzugeben, die rasch aufgebaut werden kann und für die komplette Reinigung sowohl von Großfahrzeugen als auch von kleineren und leichteren Fahrzeugen geeignet ist.

Die erfindungsgemäße Vorrichtung zum Reinigen von Fahrzeugen ist durch die Merkmale des Hauptanspruchs 1 gegeben. Sinnvolle Weiterbildungen der Erfindung sind Gegenstand von sich an den Hauptanspruch anschließenden weiteren Ansprüchen.

Die erfindungsgemäße Vorrichtung zum Reinigen von Fahrzeugen besitzt zumindest einen Container, dessen eine Seitenwand zumindest teilweise als Bodenfahrrampe ausgebildet ist. Vorzugsweise kann es sich dabei um die Seitenwand einer der Längsseiten des Containers handeln. Die Bodenfahrrampe kann zumindest teilweise von dem Container gelöst werden, so dass die Bodenfahrrampe auf dem Boden vor dem Container abgelegt werden kann. In der Bodenfahrrampe ist ein erstes Reinigungselement vorhanden, zumindest ein zweites Reinigungselement ist hinter der als Bodenfahrrampe ausgebildeten Seitenwand des Containers vorhanden.

Dadurch, dass die erfindungsgemäße Vorrichtung im Wesentlichen aus einem Container besteht, in dem alle erforderlichen Reinigungsvorrichtungen untergebracht worden sind, kann die gesamte Waschanlage besonders einfach transportiert werden. Beispielsweise könnte der Container mittels eines LKW, eines Transportkettenfahrzeugs oder gegebenenfalls sogar mittels eines Hubschraubers oder eines Flugzeugs an den gewünschten Ort verbracht werden. Auch ein Seetransport ist möglich. Darüber hinaus ist die erfindungsgemäße Vorrichtung in kurzer Zeit transportfähig und nach dem Aufstellen des Containers an dem gewünschten Ort innerhalb kurzer Zeit autark einsatzfähig. Nach beendetem Einsatz kann die Vorrichtung ebenfalls sehr rasch wieder verladebereit sein.

Der zumindest eine Container beinhaltet somit alles, was für die Reinigung der Fahrzeuge erforderlich ist, abgesehen von der Reinigungsflüssigkeit (Wasser). Das erforderliche Frischwasser kann entweder vor Ort aus einem Hydranten oder einem natürlichen Gewässer entnommen werden oder in weiteren Containern bereitgestellt werden.

Um die Vorrichtung einsatzbereit zu machen, wird an einem vorher bestimmten Platz, der beispielsweise am Übergang zwischen einem Übungsgelände für Militärfahrzeuge und einer befestigten Straße liegt und sich vorzugsweise in der Nähe eines geeigneten Wasserreservoirs befindet, eine maximale Fläche von etwa 12 Meter Breite und 15 Meter Länge mit Räumfahrzeugen eingeebnet und der Untergrund befestigt. Mittig dieser Fläche sollte ein Ablaufgraben von etwa 30 bis 50 Zentimetern Breite, 30 bis 50 Zentimetern Tiefe und mindestens 15 Metern Länge angelegt werden, in dem das Abwasser abfließen kann. Über die befestigte Straße kann der zumindest eine Container antransportiert werden und auf die eingeebnete Fläche parallel zum Ablaufgraben abgestellt werden. Dies erfolgt praktischerweise etwa rechtwinklig zu der befestigten Straße, so dass nach der Reinigung der Fahrzeuge ein einfaches Einbiegen der Fahrzeuge auf diese Straße möglich ist. Gegebenenfalls kann der Container auch etwa parallel zu der Straße aufgestellt werden, wobei in diesem Fall einige Meter Abstand eingehalten werden sollten. Anschließend wird die Bodenfahrrampe auf dem Boden abgelegt, so dass die Innenseite der ausgeklappten Containerseitenwand nach oben zeigt und den zu reinigenden Fahrzeugen als Überfahrrampe dienen kann. Zu diesem Zweck kann die Innenseite der Containerseitenwand durch Querrippen gegen Verformungen verstärkt sein. Die Querrippen dienen auch als Rüttelplanken zum Lockern der Verschmutzungen beim Befahren mit verschmutzten Ketten und Reifen.

In der Bodenfahrrampe ist ein erstes Reinigungselement angeordnet, das der Reinigung des Unterbodens sowie der Radinnenseiten beziehungsweise Kettenradinnenseiten der Fahrzeuge dient. Das Reinigungselement kann vorzugsweise als Düsenbalken ausgebildet sein. Dazu kann ein Rohr - insbesondere ein Rohr mit einem Querschnitt von etwa 3 bis 6 Zoll - mit einer Vielzahl von Sprühdüsen ausgestattet sein. Um eine gleichmäßige Reinigung des Unterbodens zu ermöglichen, kann der Düsenbalken vorzugsweise schwenkbar ausgebildet sein. Dadurch können die zu reinigenden Fahrzeuge aus verschiedenen Winkeln mit Reinigungsflüssigkeit, insbesondere mit Wasser, besprüht und damit gründlich gereinigt werden.

Dazu kann der Düsenbalken um bis zu 180 Grad, vorzugsweise um etwa 120 Grad um seine Längsachse verschwenkt werden. Das Verschwenken des Düsenbalkens erfolgt über eine Schwenkvorrichtung, die insbesondere hydraulisch, pneumatisch oder elektromechanisch betätigt werden kann. Die Schwenkvorrichtung kann an einem der beiden Rohrenden des Düsenbalkens angeordnet sein und über den Container mit Hydraulikflüssigkeit, Druckluft und/oder Energie versorgt werden.

Auch die Versorgung des ersten Reinigungselements mit Reinigungsflüssigkeit, insbesondere mit Wasser, kann über den Container erfolgen. In diesem Fall kann an mindestens einem Container eine flexible Verbindung, insbesondere eine Schlauchverbindung oder eine drehbare Rohrgelenkverbindung, vorhanden sein. Diese flexible Verbindung kann in einer Aussparung oder in einem Kanal der Bodenfahrrampe eingebaut sein und mit dieser im beschriebenen Ausklappvorgang der Bodenfahrrampe mit ausgeklappt werden. Die Zuführungsleitung kann wasserdicht in einen Steuerungsraum und/oder einen Pumpenraum geführt und dort - insbesondere im Innenbereich des Containers - mit den Pumpen und Armaturen verbunden werden.

Nach der Reinigung der Fahrzeuge verlassen diese die Bodenfahrrampen und können auf die befestige Straße einbiegen. Das erste Reinigungselement kann anschließend dazu verwendet werden, auch die Bodenfahrrampe von noch anhaftendem Schmutz zu befreien.

Hinter der als Bodenfahrrampe ausgebildeten Seitenwand befindet sich zumindest ein zweites Reinigungselement. Dieses zweite Reinigungselement kann vorzugsweise als Hochdruckdüse ausgebildet sein, die schwenkbar ausgebildet sein kann. Der Druckstrahl der Hochdruckdüse sollte ferngesteuert sein und sowohl in der Höhe als auch quer verschwenkt werden können. Vorzugsweise können zwei Hochdruckdüsen vorhanden sein, die im Bereich der hinteren und der vorderen Stirnwand des Containers angeordnet sein können. Darüber hinaus kann auch eine dritte Hochdruckdüse vorhanden sein, die etwa mittig des Containers vorhanden sein kann. Die Hochdruckdüsen dienen der Reinigung der Front- und Rückseite der Fahrzeuge. Darüber hinaus können auch die besonders stark verschmutzen Räder oder Ketten sowie die unteren Fahrzeugflanken über die zweiten Reinigungselemente intensiv gereinigt werden. Das Verschwenken der Hochdruckdüsen kann vollautomatisch über das gewählte Reinigungsprogramm erfolgen. Vorzugsweise kann es möglich sein, die Hochdruckdüsen individuell ansteuern zu können, um besonders stark verschmutzte Stellen intensiver zu reinigen.

Der Druck der Hochdruckdüsen kann individuell an die jeweiligen Erfordernisse der zu reinigenden Fahrzeuge angepasst werden. Dies kann insbesondere mechanisch durch eine Druckreduzierung und / oder elektrisch durch eine Drehzahländerung einer oder mehrerer Pumpenmotore erfolgen. Die Druckanpassung kann vollautomatisch erfolgen. Alternativ dazu kann der Druck manuell per Handregelung den Reinigungserfordernissen angepasst werden.

Die Bodenfahrrampe kann lösbar an dem Container befestigt sein und vollständig von diesem gelöst werden, um auf dem Untergrund abgelegt werden zu können. Vorzugsweise kann die Bodenfahrrampe mittels Drehgelenken über eine untere Drehachse an dem Container befestigt sein, so dass diese aus dem Container herausgeklappt werden können. Dies ermöglicht eine einfache Befestigung der Bodenfahrrampe an dem Container. Darüber hinaus kann auf diese Weise ein automatisches Heraus- und Hereinklappen der Bodenfahrrampe erfolgen. Um die Bodenfahrrampe wieder an dem Container zu befestigen, kann diese über die Drehgelenke wieder nach oben eingeklappt werden. Dieses Hochschwenken könnte auch mittels integrierter Hydraulikzylinder oder mechanischer Zugvorrichtung erfolgen.

Bei losgelöster Ablage der Bodenfahrrampe können die Zugmittel zum Heranziehen der Bodenfahrrampe in die Schwenkposition und die damit verbundenen Zugvorrichtungen an den Innenseiten der Stirnseiten des Containers angeordnet sein. Mit ihnen wird die Bodenfahrrampe wieder als Seitenwand an dem Container befestigt. Die endgültige Transportfixierung der Seitenwand kann vorzugsweise mittels Fanghaken erfolgen, die an den Containerstirnwänden befestigt sein können. Diese Fanghaken können in Ösen an der Seitenwand eingreifen, sobald diese ihre endgültige senkrechte Position erreicht hat. Das Befestigen der Seitenwand an dem Container benötigt somit maschinell lediglich wenige Minuten. Es wäre auch möglich, das Ablegen, Heranziehen und/oder Fixieren manuell beispielsweise über geeignete Seilzugvorrichtungen vorzunehmen. In beiden Fällen ist der Container somit in relativ kurzer Zeit wieder transportfähig.

In einer besonders bevorzugten Ausführungsform kann ein drittes Reinigungselement vorhanden sein, das im Innenraum des Containers in dessen oberen Bereich angeordnet sein kann. Vorzugsweise kann das dritte Reinigungselement in einer Höhe von etwa 2,6 Metern angeordnet sein. Dieses dritte Reinigungselement kann der Reinigung der oberen Fahrzeugflanken sowie der Fahrzeugdeckflächen dienen. Das dritte Reinigungselement kann vorzugsweise als Düsenbalken ausgebildet sein, der um bis zu 180 Grad, vorzugsweise um etwa 120 Grad um seine Längsachse verschwenkt werden kann. Während bei niedrig bauenden Fahrzeugen die Reinigung der Fahrzeugdeckflächen mit direktem Druckstrahl auf die Fahrzeugdeckfläche erfolgen kann, können die Sprühdüsen bei höher bauenden Fahrzeugen nach oben verschwenkt werden, um eine indirekte Besprühung des Fahrzeugdachs in Form einer Beregnung zu ermöglichen.

Um auch die Fahrzeugdächer von relativ hoch bauenden Fahrzeugen mittels Druckstahl reinigen zu können, kann der Container mit einer Hubvorrichtung ausgestattet sein, so dass dieser ein Stück weit angehoben werden kann. Die Hubvorrichtung kann insbesondere vier Hubstempel aufweisen, die an den vier Ecken der Containerbodenplatte befestigt sind. Mittels der Hubvorrichtung kann es möglich sein, den Container um bis zu etwa 70 Zentimeter anzuheben. Die Hubvorrichtung kann auch dazu genutzt werden, den Container in der Waagrechten auszurichten, sofern das vorgesehene Gelände nicht ausreichend eben ist. Die Hubvorrichtung kann insbesondere hydraulisch oder elektromechanisch betrieben werden.

Alternativ oder zusätzlich dazu kann das Dach des Containers nach oben aufgeklappt werden können und zumindest ein weiteres Reinigungselement aufweisen. Dadurch können auch besonders hohe Fahrzeuge oder Fahrzeuge mit einem hohen Aufbau gründlich gereinigt werden, da das im Dach des Containers integrierte Reinigungselement über die eigentliche Höhe des Containers aufragt. Das Reinigungselement kann insbesondere als Düsenbalken ausgebildet sein, der vorzugsweise um seine Längsachse schwenkbar ausgebildet sein kann. Somit kann insbesondere die Dachfläche der zu reinigenden Fahrzeuge erreicht und damit effektiv gereinigt werden. Der Düsenbalken kann vorzugsweise entlang der nach oben weisenden Längskante der Containerdachfläche vorhanden sein. Das Aufklappen des Dachs des Containers kann insbesondere mittels Hydraulik- oder Pneumatikzylinder oder über elektromechanische Bauelemente erfolgen. Auf diese Weise können auch höher liegende Aufbauten wie beispielsweise Sonderaufbauten ausreichend von einem direkten Druckwasserstrahl bestrichen werden.

Um den Innenraum des Containers bei aufgeklappter Dachfläche vor Nässe und Verschmutzung zu schützen, kann unterhalb der aufklappbaren Dachfläche eine zweite, innere Dachfläche fest vorhanden sein, die den inneren Bereich des Containers wasserdicht abschließt.

Der Betrieb der Waschanlage soll mit einem möglichst geringen Risiko für die Gesundheit des Personals möglich sein. Daher kann die erfindungsgemäße Vorrichtung vorzugsweise ferngesteuert arbeiten. Darüber hinaus kann die Vorrichtung einen im Innenraum des Containers angeordneten Steuerungsraum aufweisen, in dem sich das Personal während des Reinigungsvorgangs aufhalten kann. Der Steuerungsraum kann dazu spritzwassergeschützt ausgebildet sein, um sowohl im Betrieb als auch beim Seetransport ein Eindringen von Flüssigkeiten zu verhindern. Aus diesem Steuerungsraum heraus kann die Steuerung des Reinigungsvorgangs und auch dessen Überwachung erfolgen. In dem Steuerungsraum kann ein Bedienstand mit elektronischen Steuerungen vorhanden sein.

Der Steuerungsraum kann in konstruktiv besonders einfacher Weise dadurch gebildet werden, dass eine zweite, nach innen versetzte Seitenwand in dem Container vorhanden ist, die spritzwasserdicht mit der inneren Dachfläche, den Stirnseiten und dem Boden des Containers verbunden ist. Dabei kann es ausreichend sein, die Innenwand des Containers um lediglich etwa 70 Zentimeter von der als Bodenfahrrampe ausgebildeten Seitenwand des Containers zu beabstanden. In dem Steuerungsraum kann zumindest ein Fenster ausgebildet sein, das auf die Bodenfahrrampe gerichtet ist, so dass eine Sichtkontrolle des Waschvorgangs möglich ist. Die Fenster können vorzugsweise mit besonders verstärkten Glasscheiben ausgestattet sein.

In einer besonders vorteilhaften Ausführungsform können zwei Container vorhanden sein, die einander gegenüber liegend angeordnet sind. Auf diese Weise ist eine Reinigung des Fahrzeugs auf beiden Seiten zugleich möglich, ohne dass das Fahrzeug zwischendurch gewendet werden müsste. Die beiden Bodenfahrrampen der beiden Container liegen bei dieser Ausführungsform parallel zueinander zwischen den beiden Containern. In diesem Fall können beide Bodenfahrrampen mit jeweils einem ersten Reinigungselement ausgestattet sein. Es kann jedoch ausreichend sein, lediglich in einer der beiden Bodenfahrrampen ein erstes Reinigungselement vorzusehen, sofern dieses am äußeren Rand der entsprechenden Bodenfahrrampe angeordnet ist und damit längs nahezu in der Mitte der gesamten Überfahrrampe liegt.

Grundsätzlich ist es möglich, die beiden Bodenfahrrampen ohne Verbindung zueinander abzulegen und jeweils eigenständig zu betreiben. Vorzugsweise können die beiden Bodenfahrrampen aneinander befestigt werden können, um ein Verrutschen der Bodenfahrrampen beim Überfahren derselben mit einem Fahrzeug zu verhindern. Bei Fahrzeugen mit besonders hohem Eigengewicht und in besonderen Einsatzfällen sollten die Bodenfahrrampen von den Containern gelöst werden, um zu verhindern, dass in diesem Fall beim Befahren der Bodenfahrrampen die entstehenden Verschiebungen der Bodenfahrrampen und damit ausgelöste Querkräfte die Container beschädigen können.

Die Befestigung der beiden Bodenfahrrampen aneinander kann dadurch erfolgen, dass sich die beiden Bodenfahrrampen im mittleren Bereich teilweise verhaken. In diesem Fall können die Querseiten der beiden Bodenfahrrampen zusätzlich noch mit Zugstangen aneinander befestigt werden, so dass auch beim Überfahren der Bodenfahrrampen mit schwerlastigen Fahrzeugen die gesamte Überfahrrampe nicht auseinander gedrückt werden kann.

Vorzugsweise können die eingesetzten Container steuerungstechnisch so miteinander gekoppelt werden, dass ein Betrieb der gesamten Vorrichtung durch eine einzelne Bedienperson erfolgen kann. Diese Bedienperson könnte sich dann beispielsweise in dem Steuerungsraums eines der Container aufhalten, und sowohl die Reinigungselemente dieses Containers als auch die Reinigungselemente der übrigen Container steuern und überwachen. Alternativ dazu könnte die Bedienperson auch über Funk sämtliche Reinigungselemente aller verwendeten Container steuern.

Bei der Verwendung von zwei gegenüber liegenden, parallel aufgestellten Containern kann es möglich sein, eine geschlossene Dachkonstruktion zu erreichen, indem die außen liegenden Dachflächen der beiden Container jeweils in ihrer Längsseite mittels Faltmechanismus mehrfach aufgeklappt werden können, bis sich die Dachflächen der beiden Container gegenseitig berühren. Sofern zudem auch die beiden vorderen und hinteren Stirnseiten der beiden Container aufklappbar ausgeführt sind, so dass sich diese vergleichbar einem Tor in Richtung der Bodenfahrrampen zuklappen lassen, entsteht ein weitgehend geschlossener Raum. Damit wird beim Reinigungsvorgang des in diesem Raum befindlichen Fahrzeugs ein Spritzschutz für die Umgebung erreicht. Ein ungewolltes Kontaminieren der unmittelbaren Umgebung wird damit vermieden.

Die erfindungsgemäße Vorrichtung muss mit ausreichend Reinigungsmedium versorgt werden. Dies kann beispielsweise über eine externe Versorgungs-Pumpvorrichtung oder über einen Anschluss an ein Wassernetz erfolgen. Mit einer Versorgungs-Pumpvorrichtung kann Wasser aus Teichen, Flüssen und anderen geeigneten Speichern entnommen werden. Die externe Versorgungs-Pumpvorrichtung kann eine selbstansaugende Pumpe und/oder eine versenkbare Tauchpumpe besitzen. Die erfindungsgemäße Vorrichtung und/oder die externe Versorgungs-Pumpvorrichtung können mit einer Notstromanlage oder über das vorhandene Stromnetz mit Strom versorgt werden. Es besteht auch die Möglichkeit, die erfindungsgemäße Vorrichtung und/oder die externe Versorgungs-Pumpvorrichtung mit einem oder mit mehreren direkt gekoppelten Verbrennungsmotoren anzutreiben.

Die Ansaugfunktion für das Reinigungsmedium kann vorzugsweise in die erfindungsgemäße Vorrichtung integriert sein. Über geeignete Saug- oder Druckrohre sowie notwenige Armaturen, Sensoren und Saugfilter kann die externe Versorgungs-Pumpvorrichtung mit der erfindungsgemäßen Vorrichtung verbunden werden. Dazu sollten die Saug- und Druckrohre in Rohrgräben verlegt werden, die - sofern sie die Zufahrtsstraßen kreuzen - entsprechend geschützt werden sollten. Vorzugsweise können auch die für die Energieversorgung erforderlichen Kraftstoffe in Kraftstofftanks mitgeführt werden, die insbesondere im Container selbst mitgeführt werden können.

Um die Vorrichtung möglichst autark betreiben zu können, kann bereits eine Pumpenvorrichtung samt der notwendigen Ventile in dem Container vorhanden sein. Auch die Energieversorgung kann über eine in dem Container vorhandene Energieversorgungseinheit - beispielsweise über einen Generator - erfolgen. Vorzugsweise können auch die für die Energieversorgungseinheit erforderlichen Kraftstoffe in in den Container integrierten Kraftstofftanks mitgeführt werden.

Bei den eingesetzten Containern kann es sich insbesondere um Normcontainer handeln, die eine Breite von 2,438 Metern aufweisen. Auf diese Weise ist ein einfacher Transport sichergestellt. Die Normcontainer können als Großcontainer mit einer Länge von 13,716 Metern ausgebildet sein, um auch die Reinigung von längeren Fahrzeugen in einem einzigen Reinigungsdurchgang zu ermöglichen. Es wäre jedoch auch möglich, Container mit einer Länge von lediglich 6,058 Metern einzusetzen. In diesem Fall kann es erforderlich sein, bei längeren Fahrzeugen zunächst den vorderen Teil des Fahrzeugs zu reinigen, dieses anschließend ein Stück nach vorne zu fahren und in einem zweiten Reinigungsdurchgang den hinteren Teil des Fahrzeugs zu reinigen. Alternativ dazu könnten zwei oder mehr "kleinere" Container in einer Reihe hintereinander aufgestellt werden, um auch längere Fahrzeuge in einem Reinigungsdurchgang reinigen zu können.

Um insbesondere auch die Dachflächen effektiv reinigen zu können, können vorzugsweise High-Cube-Container mit einer Höhe von 2,896 Metern eingesetzt werden, die sowohl mit einer Länge von 13,716 Metern (45 Fuß) als auch mit einer Länge von 6,058 Metern (20 Fuß) erhältlich sind.

Die erfindungsgemäße Vorrichtung besteht bis auf wenige Ausnahmen aus handelsüblichen genormten Bauteilen, so dass eine kostengünstige Herstellung derselben möglich ist. Für die Pumpentechnik können beispielsweise aus dem Stand der Technik bereits bekannte, selbstansaugende horizontale Kreiselpumpen oder vertikale Druckpumpen eingesetzt werden.

Die erfindungsgemäße Vorrichtung ermöglicht die Reinigung aller Arten von Fahrzeugen mit einer Länge von bis zu 12 Metern, einer Breite von bis zu 10 Metern und einer Höhe von bis zu 4,5 Metern. Somit können Personenkraftwagen, Baustellenfahrzeuge wie Bagger aber auch Kampffahrzeuge mit Gleisketten und Mannschaftsfahrzeuge - auch solche mit speziellen Aufbauten - rasch, automatisiert und gründlich gereinigt werden. Auch die Reinigung von führerlosen, selbstfahrenden Großarbeitsgeräten, beispielsweise für die Demontage von Kernkraftwerken, ist möglich, ohne dass es zu einer Gefährdung oder Kontamination von Reinigungspersonal kommen würde. Gegebenenfalls kann auch eine Reinigung von Hubschraubern und kleineren Kampfflugzeugen mit und ohne Besatzung erfolgen, sofern die Container mit entsprechendem Abstand zueinander platziert werden.

Die erfindungsgemäße Vorrichtung kann mit Frischwasser betrieben werden, dem gegebenenfalls ein entsprechendes Reinigungsmittel zugesetzt werden kann. Dieses Reinigungsmittel kann mitgeführt werden, so dass im Bedarfsfall rasch ein solches eingesetzt werden kann. Sofern nicht nur eine Reinigung sondern auch ein Dekontaminieren von Fahrzeugen erfolgen soll, können dem Frischwasser entsprechende Zusätze beigemischt werden. Sogar die Verwendung von Salzwasser (Meerwasser) kann möglich sein, sofern seewasserfeste Pumpen- und Rohrtechnik zum Einsatz kommt.

Die Entsorgung des Abwassers kann durch die vor Ort gegebene Kanalisation erfolgen. Alternativ dazu kann eine separate Abwasseraufbereitungsanlage wie sie bereits aus dem Stand der Technik bekannt ist, bereitgestellt werden, insbesondere wenn eine Reinigung des Abwassers erforderlich ist.

Sofern die erfindungsgemäße Vorrichtung zur Reinigung von militärischen Fahrzeugen verwendet werden soll, können die Container bei Bedarf beispielsweise mit Tarnzelten überstülpt werden, um die Aufklärungsmöglichkeit aus der Luft zu verringern. Darüber hinaus können die Container mit integrierten elektronischen Überwachungseinrichtungen ausgestattet sein, um diese auch in abgelegenen Bereichen vor unbefugtem Betreten zu schützen und zu sichern. Bei hochgeklappter und gesicherter Bodenfahrrampe können die Container verschlossen werden und sind so gegen Einbruch geschützt. Die Container können innerhalb einer mechanischen Schutzumzäunung aufgebaut werden, so dass diese gegen unbefugtes Betreten - beispielsweise im Fall einer Kontaminierungssperrzone - gesichert sind.

In einem weiteren Container können gegebenenfalls weitere Zubehör- und Ausrüstungsgegenstände bereitgestellt werden. Dabei kann es sich beispielsweise um Schläuche, Handwaschgeräte, Stiefelwaschanlagen oder ähnliches handeln. Auf diese Weise ist auch eine Reinigung der Personen und der Ausrüstung möglich. Darüber hinaus kann auch eine Messung der Kontaminierung von Personen oder eine spezielle Reinigung besonderer Fahrzeugaufbauten durch entsprechende Ausrüstung - beispielsweise in Form von Reinigungsduschen - möglich sein. Ferner könnte in diesem Container auch eine Ersatzteilbevorratung erfolgen.

Die erfindungsgemäße Vorrichtung kann weltweit eingesetzt werden und insbesondere der Reinigung schwerer Technik dienen. So kann bei Militärfahrzeugen die Reinigung unmittelbar nach einer Übung noch auf dem Übungsgelände erfolgen, nach einem Kampfeinsatz im Idealfall vor dem Befahren öffentlicher Straßen. Im Fall von Tagebau- oder Baustellenfahrzeugen kann die Reinigung der ausfahrenden, verschlammten Fahrzeuge direkt auf der Baustelle erfolgen. Auch bei Havarieunfällen mit giftigen oder gesundheitsschädlichen Stoffen können die Aufräumfahrzeuge von chemisch, radiologisch oder biologisch kontaminierten Bodenmaterialien einfach und sicher befreit werden.

Weitere Vorteile und Merkmale der Erfindung sind den in den Ansprüchen ferner angegebenen Merkmalen sowie den nachstehenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: eine perspektivische Ansicht einer erfindungsgemäßen Vorrichtung mit zwei parallel zueinander angeordneten Containern, bei denen die Bodenfahrrampe jeweils ausgeklappt ist,
- Fig. 2: eine perspektivische Ansicht eines einzelnen Containers, bei dem die Bodenfahrrampe eingeklappt ist und
- Fig. 3: eine schematische Schnittdarstellung einer alternativen erfindungsgemäßen Vorrichtung mit aufgeklappter Dachfläche des rechten Containers und auf den Bodenfahrrampen vorhandenem Panzer.

### WEGE ZUM AUSFÜHREN DER ERFINDUNG

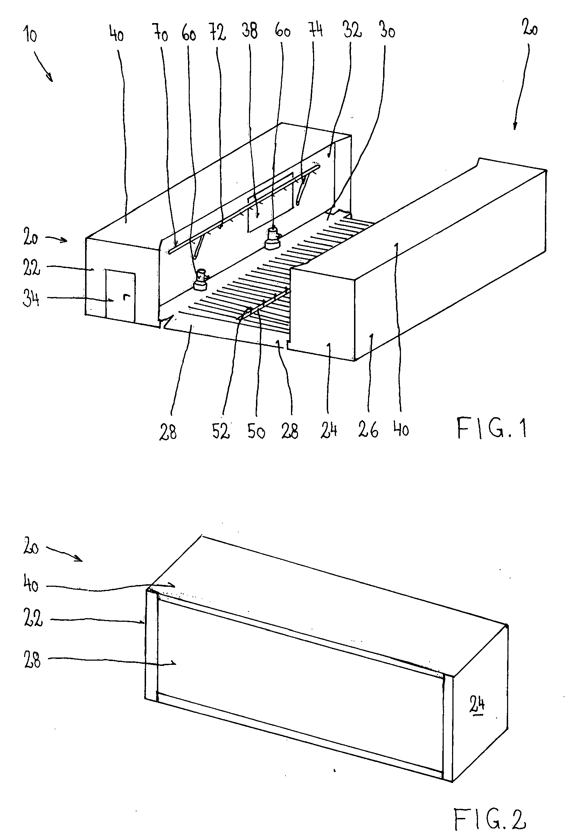

Eine erfindungsgemäße Vorrichtung 10 zum Reinigen von Fahrzeugen 12 ist in Fig. 1 dargestellt. Die Vorrichtung 10 besitzt im vorliegenden Beispielsfall zwei Container 20, von denen einer in seinem geschlossenen Zustand in Fig. 2 dargestellt ist.

Der Container 20 besitzt eine erste Stirnwand 22, eine zweite Stirnwand 24, eine Rückwand 26 und eine Seitenwand, die als Bodenfahrrampe 28 ausgebildet ist. Die beiden Stirnwände 22, 24 sowie die Rückwand 26 sind an einem Boden 30 befestigt. Die Bodenfahrrampe 28 kann lösbar an dem Boden 30 und den beiden Stirnwänden 22, 24 befestigt werden. Parallel zu der als Bodenfahrrampe 28 ausgebildeten Seitenwand ist eine Innenwand 32 vorhanden, die an den beiden Stirnwänden 22, 24 sowie dem Boden 30 spritzwassergeschützt befestigt ist.

Gemäß dem vorliegenden Ausführungsbeispiel ist in der Stirnwand 22 eine Tür 34 vorgesehen, um den durch die beiden Stirnwände 22, 24, die Rückwand 26 und die Innenwand 32 gebildeten Steuerungsraum 36 betreten zu können. Dieser Steuerungsraum 36 ist durch die spritzwassergeschützten Wände 22, 24, 26, 32 von der Umgebung getrennt. Im Gegensatz zu der in der Zeichnung dargestellten Ausführungsform könnte die Tür 34 auch in der Rückwand 26 oder in der anderen Stirnwand 24 vorgesehen sein. Auch könnten weitere Türen 34 vorhanden sein, um den Steuerungsraum 36 aus mehreren Richtungen betreten zu können. In der Innenwand 32 befindet sich im vorliegenden Beispielsfall ein Fenster 38, das ebenfalls spritzwassergeschützt ausgebildet ist. Durch das Fenster 38 kann eine Sichtkontrolle des Reinigungsvorgangs vorgenommen werden, ohne den Steuerungsraum 36 verlassen zu müssen. Im Gegensatz zu der in der Zeichnung dargestellten Ausführungsform könnten auch mehrere Fenster 38 in der Innenwand 32 vorgesehen werden. Es wäre auch möglich, auf ein Fenster 38 zu verzichten und statt dessen eine oder mehrere Kameras vorzusehen, durch die ebenfalls eine Sichtkontrolle möglich wäre.

Nach oben wird der Container 20 durch ein Dach 40 abgeschlossen, das gemäß Fig. 1 und 2 fest mit den Stirnwänden 22, 24, der Rückwand 26 und der Innenwand 32 verbunden ist.

Die Container 20 wurden im vorliegenden Beispielsfall mit einem gegenseitigen Abstand von etwa 5 Metern - bezogen auf die eingeklappte Bodenfahrrampe 28 - zueinander aufgestellt. Die beiden ausgeklappten Bodenfahrrampen 28 können sich hierbei leicht überlappen und bilden dadurch eine gemeinsame Überfahrrampe.

Die Bodenfahrrampe 28 ist mit einem ersten Reinigungselement 50 ausgestattet, das im vorliegenden Beispielsfall als verschwenkbarer Düsenbalken ausgebildet ist. Der Düsenbalken ist mit mehreren Düsen 52 versehen, die in einem gegenseitigen Abstand von etwa 8 bis 15 Zentimetern angebracht sind. Die Düsen 52 haben einen Durchmesser von etwa 8 bis 50 Millimetern und können in Längsrichtung des Düsenbalkens 50 verschwenkt werden. Sie können über eine - mit Schlitzen für die Düsen 52 versehene - Aufnahme verbunden sein. Diese Aufnahme kann hydraulisch, pneumatisch und/oder elektromechanisch bewegt werden und eine gleichzeitige, kontrollierte Bewegung der Kleindüsen 52 bewirken. Das erste Reinigungselement 50 mit den Düsen 52 dient vorwiegend der Reinigung des Unterbodens des Fahrzeugs 12.

Darüber hinaus sind zweite Reinigungselemente 60 vorhanden, die als drehbare Hochdruckdüsen ausgebildet sind. Im vorliegenden Beispielsfall sind zwei zweite Reinigungselemente 60 vorhanden, die auf dem Containerboden 30 in der Nähe des inneren Rands der Bodenfahrrampe 28 angeordnet sind. Die Innenwand 32 ist so weit nach innen versetzt angeordnet, dass ausreichend Zwischenraum zwischen der Innenwand 32 und der Bodenfahrrampe 28 im hochgeklappten Zustand besteht, dass die zweiten Reinigungselemente 60 an ihrem Standort verbleiben können.

Am mittleren Bereich des Containers 20 ist darüber hinaus ein drittes Reinigungselement 70 vorhanden, das im vorliegenden Beispielsfall als verschwenkbarer Düsenbalken ausgebildet ist. Der Düsenbalken 70 ist mit mehreren kleinen Düsen 72 versehen, die in einem Abstand von etwa 8 bis 15 Zentimetern angebracht sind. Die Düsen 72 haben einen Durchmesser von etwa 8 bis 50 Millimetern und können in Längsrichtung des Düsenbalkens 70 verschwenkt werden. Sie können über eine - mit Schlitzen für die Düsen 72 versehene - Aufnahme verbunden sein. Diese Aufnahme kann hydraulisch, pneumatisch und/oder elektromechanisch bewegt werden und eine gleichzeitige, kontrollierte Bewegung der Kleindüsen 72 bewirken. Der Düsenbalken 70 ist mit einem Tragarm 74 verbunden, der über ein Gelenk schwenkbar an der Innenwand 32 des Containers 20 befestigt ist. Der Schwenkantrieb für den Tragarm 74 kann hydraulisch, pneumatisch und/oder elektromechanisch erfolgen. Das dritte Reinigungselement 70 dient vorwiegend der Reinigung der Seitenflanken des Fahrzeugs 10.

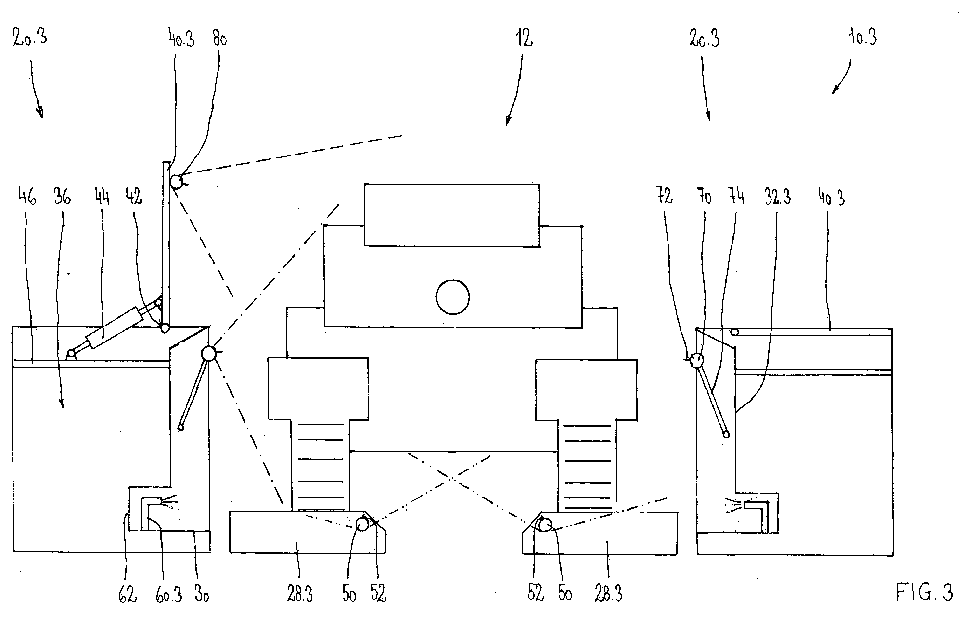

Bei dem in Fig. 1 und 2 dargestellten Ausführungsbeispiel können die Dachflächen der Container 20 nicht nach oben geklappt werden. Bei dem Ausführungsbeispiel gemäß Fig. 3 sind bei der Vorrichtung 10.3 dagegen solche Container 20.3 verwendet worden, bei denen sich das Dach 40.3 nach oben um eine Drehachse 42 verschwenken lässt. Dies kann beispielsweise mittels mehrerer Hydraulikzylinder 44 erfolgen. Um den inneren Steuerungsraum 36 vor Spritzwasser zu schützen, ist unterhalb des nach oben klappbaren Dachs 40.3 ein weiteres Innendach 46 vorhanden, das spritzwassergeschützt mit der Innenwand 32.3, der Rückwand 26 und den beiden Stirnwänden 22,24 des Containers 20.3 verbunden ist.

Die zweiten Reinigungselemente 60.3 sind im Gegensatz zu dem in Fig. 1 und 2 beschriebenen Ausführungsbeispiel in Nischen 62 angeordnet, die in der Innenwand 32.3 des Containers 20.3 vorhanden sind. Für jede der Hochdruckdüsen 60.3 ist im vorliegenden Beispielsfall eine eigene Nische 62 vorhanden. Es wäre auch möglich, eine Nische vorzusehen, die über die gesamte Längsachse des Containers reicht, so dass alle Hochdruckdüsen des zweiten Reinigungselements in dieser Nische angeordnet werden könnten.

An der nach oben weisenden Kante des Dachs 40.3 ist ein weiteres Reinigungselement 80 angeordnet, das im vorliegenden Beispielsfall ebenfalls als schwenkbarer Düsenbalken ausgebildet ist. Alternativ dazu kann das weitere Reinigungselement eine oder mehrere Hochdruckdüsen aufweisen und damit analog dem zweiten Reinigungselement 60, 60.3 ausgebildet sein. Auf diese Weise kann auch die Deckfläche von höheren Fahrzeugen 12 effektiv gereinigt werden.

Bei dem in Fig. 1 und 2 dargestellten Ausführungsbeispiel sind die Bodenfahrrampen 28 an ihrem inneren Randbereich fest mit dem Container 20 verbunden. Dies kann beispielsweise über eine oder mehrere Gelenkverbindungen erfolgen. Im Gegensatz dazu wurden die Bodenfahrrampen 28.3 gemäß Fig. 3 vollständig von dem Container 20.3 entfernt. Die Bodenfahrrampen 28.3 wurden nicht aneinander befestigt, sondern sind vielmehr mit einem gegenseitigen Abstand zueinander, etwa parallel nebeneinander vorhanden.

Durch die Anordnung mehrerer Reinigungselemente in verschiedenen Höhenlagen längs zu den Fahrzeugen ist eine Rundumreinigung dieser Großfahrzeuge möglich, ohne dass eine zusätzliche Handreinigung durch weiteres Personal vorgenommen werden müsste. Dadurch ist insbesondere bei stark kontaminierten Fahrzeugen ein guter Schutz für das Reinigungspersonal und für die Fahrzeugbesatzung gewährleistet.

In jedem der beiden Container ist eine Pumpanlage eingebaut, die den Mediumdruck für die Reinigungsaufgaben außerhalb des Containers bereitstellt. Über einen an der Außenwand des Containers verbauten und verschließbaren Anschluss für das Reinigungsmedium können weitere Schläuche und Rohre angeschlossen werden. Damit ist ein Betrieb weiterer, handbetriebener Reinigungsvorgänge für Personen und deren Ausrüstung sowie weiterer Kleinteile - beispielsweise Kleinbewaffnung oder Stiefelwaschanlagen - möglich. In einer besonders bevorzugten Ausführungsvariante kann eine Eingangs- und Ausgangsschleuse am Container betrieben werden. Dazu ist im Container eine zusätzliche Kompressoranlage verbaut, die einen definierten Überdruck im Container und in der Schleuse erzeugt.

## Patentansprüche

1. Vorrichtung (10) zum Reinigen von Fahrzeugen (12),
- mit zumindest einem Container (20, 20.3),
- wobei eine Seitenwand des Containers (20, 20.3) zumindest teilweise als Bodenfahrrampe (28, 28.3) ausgebildet ist,
- wobei die Bodenfahrrampe (28, 28.3) zumindest teilweise von dem Container (20, 20.3) lösbar ist,
- wobei in der Bodenfahrrampe (28, 28.3) ein erstes Reinigungselement (50) vorhanden ist,
- wobei hinter der Seitenwand (28, 28.3) des Containers (20, 20.3) zumindest ein zweites Reinigungselement (60, 60.3) vorhanden ist.

2. Vorrichtung nach Anspruch 1,
- **dadurch gekennzeichnet, dass**
- die Bodenfahrrampe (28) aus dem Container (20) herausklappbar ist.

3. Vorrichtung nach Anspruch 1 oder 2,
- **dadurch gekennzeichnet, dass**
- die Bodenfahrrampe (28, 28.3) mehrere Querrippen aufweist.

4. Vorrichtung nach einem der vorstehenden Ansprüche,
- **dadurch gekennzeichnet, dass**
- das erste Reinigungselement (50) der Bodenfahrrampe (28, 28.3) als Düsenbalken ausgebildet ist, der insbesondere schwenkbar ausgebildet ist.

5. Vorrichtung nach einem der vorstehenden Ansprüche,
- **dadurch gekennzeichnet, dass**
- das zumindest eine zweite Reinigungselement (60, 60.3) als Hochdruckdüse ausgebildet ist.

6. Vorrichtung nach einem der vorstehenden Ansprüche,
- **dadurch gekennzeichnet, dass**
- ein drittes Reinigungselement (70) vorhanden ist,
- das dritte Reinigungselement (70) im oberen Bereich des Containers (20, 20.3) angeordnet ist.

7. Vorrichtung nach Anspruch 6,
- **dadurch gekennzeichnet, dass**
- das dritte Reinigungselement (70) als Düsenbalken ausgebildet ist, der insbesondere schwenkbar ausgebildet ist.

8. Vorrichtung nach einem der vorstehenden Ansprüche,
- **dadurch gekennzeichnet, dass**
- das erste Reinigungselement (50) und/oder das dritte Reinigungselement (70) mehrere Düsen (52, 72) aufweist,
- diese Düsen (52, 72) in Längsrichtung des ersten beziehungsweise dritten Reinigungselements (50, 70) verschwenkbar ausgebildet sind.

9. Vorrichtung nach einem der vorstehenden Ansprüche,
- **dadurch gekennzeichnet, dass**
- eine Hubvorrichtung vorhanden ist, mittels der der Container ausrichtbar und anhebbar ist.

10. Vorrichtung nach einem der vorstehenden Ansprüche,
- **dadurch gekennzeichnet, dass**
- das Dach (40.3) des Containers (20.3) nach oben aufklappbar ausgebildet ist,
- an dem Dach (40.3) des Containers (20.3) ein weiteres Reinigungselement (80) vorhanden ist.

11. Vorrichtung nach einem der vorstehenden Ansprüche,
- **dadurch gekennzeichnet, dass**
- im Innenraum des Containers (20, 20.3) ein Steuerungsraum (36) vorhanden ist.

12. Vorrichtung nach einem der vorstehenden Ansprüchen,
- **dadurch gekennzeichnet, dass**
- zwei Container (20, 20.3) vorhanden sind, die einander gegenüber liegend angeordnet sind.

13. Vorrichtung nach Anspruch 12,
- **dadurch gekennzeichnet, dass**
- beide Container ein ausklappbares Dach aufweisen,
- die beiden ausgeklappten Dächer der beiden Container eine gemeinsame Dachkonstruktion bilden.

14. Vorrichtung nach Anspruch 12 oder 13,
- **dadurch gekennzeichnet, dass**
- die beiden Stirnwände der beiden Container jeweils nach innen - auf den anderen Container hin - klappbar ausgebildet sind, so dass die Bodenfahrrampen der beiden Container nach vorne und hinten hin durch die Stirnwände der Container verschließbar sind.

15. Vorrichtung nach einem der vorstehenden Ansprüche,
- **dadurch gekennzeichnet, dass**
- zumindest eine Pumpvorrichtung und/oder zumindest eine Energieerzeugungseinheit vorhanden ist

## Claims

1. Apparatus (10) for cleaning vehicles (12),
- comprising at least one container (20, 20.3),
- wherein a side wall of the container (20, 20.3) is at least partially designed as a ground-level loading ramp (28, 28.3),
- wherein the ground-level loading ramp (28, 28.3) is at least partially detachable from the container (20, 20.3),
- wherein there is a first cleaning element (50) in the ground-level loading ramp (28, 28.3),
- wherein there is at least one second cleaning element (60, 60.3) behind the side wall (28, 28.3) of the container (20, 20.3).

2. Apparatus according to Claim 1,
- **characterized in that**
- the ground-level loading ramp (28) can be unfolded out of the container (20).

3. Apparatus according to Claim 1 or 2,
- **characterized in that**
- the ground-level loading ramp (28, 28.3) has a plurality of transverse ribs.

4. Apparatus according to one of the preceding claims,
- **characterized in that**
- the first cleaning element (50) of the ground-level loading ramp (28, 28.3) is designed as a nozzle bar which is designed in particular so as to be pivotable.

5. Apparatus according to one of the preceding claims,
- **characterized in that**
- the at least one second cleaning element (60, 60.3) is designed as a high-pressure nozzle.

6. Apparatus according to one of the preceding claims,
- **characterized in that**
- there is a third cleaning element (70),
- the third cleaning element (70) is arranged in the upper region of the container (20, 20.3).

7. Apparatus according to Claim 6,
- **characterized in that**
- the third cleaning element (70) is designed as a nozzle bar which is designed in particular so as to be pivotable.

8. Apparatus according to one of the preceding claims,
- **characterized in that**
- the first cleaning element (50) and/or the third cleaning element (70) has a plurality of nozzles (52, 72),
- said nozzles (52, 72) are designed so as to be pivotable in the longitudinal direction of the first or third cleaning element (50, 70).

9. Apparatus according to one of the preceding claims,
- **characterized in that**
- there is a lifting apparatus by means of which the container can be oriented and can be raised.

10. Apparatus according to one of the preceding claims,
- **characterized in that**
- the roof (40.3) of the container (20.3) is designed such that it can be opened upwards,
- there is a further cleaning element (80) on the roof (40.3) of the container (20.3).

11. Apparatus according to one of the preceding claims,
- **characterized in that**
- there is a control space (36) in the interior of the container (20, 20.3).

12. Apparatus according to one of the preceding claims,
- **characterized in that**
- there are two containers (20, 20.3) which are arranged lying opposite each other.

13. Apparatus according to Claim 12,
- **characterized in that**
- the two containers have an unfoldable roof,
- the two unfolded roofs of the two containers form a joint roof structure.

14. Apparatus according to Claim 12 or 13,
- **characterized in that**
- the two end walls of the two containers are each designed so as to be foldable inwards onto the other container, and therefore the ground-level loading ramps of the two containers are closable to the front and rear by the end walls of the containers.

15. Apparatus according to one of the preceding claims,
- **characterized in that**
- there is at least one pump apparatus and/or at least one power generation unit.

## Revendications

1. Dispositif (10) de lavage de véhicules (12),
- avec au moins un conteneur (20, 20.3),
- une paroi latérale du conteneur (20, 20.3) étant réalisée au moins en partie sous forme de rampe de conduite au sol (28, 28.3),
- la rampe de conduite au sol (28, 28.3) étant au moins en partie détachable du conteneur (20, 20.3),
- un premier élément de lavage (50) étant prévu dans la rampe de conduite au sol (28, 28.3),
- au moins un deuxième élément de lavage (60, 60.3) étant prévu derrière la paroi latérale (28, 28.3) du conteneur (20, 20.3).

2. Dispositif selon la revendication 1,
**caractérisé en ce que**
- la rampe de conduite au sol (28) peut être déployée hors du conteneur (20).

3. Dispositif selon la revendication 1 ou 2,
**caractérisé en ce que**
- la rampe de conduite au sol (28, 28.3) présente plusieurs rainures transversales.

4. Dispositif selon l'une quelconque des revendications précédentes,
**caractérisé en ce que**
- le premier élément de lavage (50) de la rampe de conduite au sol (28, 28.3) est réalisé sous forme de barre à buses qui est réalisée notamment de manière pivotante.

5. Dispositif selon l'une quelconque des revendications précédentes,
**caractérisé en ce que**
- au moins un deuxième élément de lavage (60, 60.3) est réalisé sous forme de buse à haute pression.

6. Dispositif selon l'une quelconque des revendications précédentes,
**caractérisé en ce que**
- un troisième élément de lavage (70) est prévu,
- le troisième élément de lavage (70) est disposé dans la région supérieure du conteneur (20, 20.3).

7. Dispositif selon la revendication 6,
**caractérisé en ce que**
- le troisième élément de lavage (70) est réalisé sous forme de barre à buses, qui est réalisé en particulier de manière pivotante.

8. Dispositif selon l'une quelconque des revendications précédentes,
**caractérisé en ce que**
- le premier élément de lavage (50) et/ou le troisième élément de lavage (70) présentent plusieurs buses (52, 72),
- ces buses (52, 72) sont réalisées de manière pivotante dans la direction longitudinale du premier, respectivement du troisième élément de lavage (50, 70).

9. Dispositif selon l'une quelconque des revendications précédentes,
**caractérisé en ce que**
- un dispositif de levage est prévu au moyen duquel le conteneur peut être orienté et soulevé.

10. Dispositif selon l'une quelconque des revendications précédentes,
**caractérisé en ce que**
- le toit (40.3) du conteneur (20.3) est réalisé de manière à pouvoir être rabattu vers le haut,
- un élément de lavage supplémentaire (80) est prévu sur le toit (40.3) du conteneur (20.3).

11. Dispositif selon l'une quelconque des revendications précédentes,
**caractérisé en ce que**
- un espace de commande (36) est prévu dans l'espace interne du conteneur (20, 20.3).

12. Dispositif selon l'une quelconque des revendications précédentes,
**caractérisé en ce que**
- deux conteneurs (20, 20.3) sont prévus, lesquels sont disposés l'un en face de l'autre.

13. Dispositif selon la revendication 12,
**caractérisé en ce que**
- les deux conteneurs présentent un toit rabattable,
- les deux toits rabattables des deux conteneurs forment une construction de toit commune.

14. Dispositif selon la revendication 12 ou 13,
**caractérisé en ce que**
- les deux parois frontales des deux conteneurs sont réalisées à chaque fois de manière rabattable vers l'intérieur - vers l'autre conteneur -, de telle sorte que les rampes de conduite au sol des deux conteneurs puissent être fermées vers l'avant et vers l'arrière par les parois frontales des conteneurs.

15. Dispositif selon l'une quelconque des revendications précédentes,
**caractérisé en ce que**
- au moins un dispositif de pompe et/ou au moins une unité de génération d'énergie sont présents.
